# EUROPÄISCHE PATENTSCHRIFT

(11) **EP 1 023 566 B1**
(45) Veröffentlichungstag und Bekanntmachung des Hinweises auf die Patenterteilung: **10.09.2003**
(21) Anmeldenummer: 98955480.3
(22) Anmeldetag: 16.10.1998
(51) Int. Cl.: F25D 23/06

(54) **WÄRMEISOLIERENDE WANDUNG**
HEAT-INSULATING WALL
PAROI CALORIFUGE

(30) Priorität: 16.10.1997 DE 19745862
(43) Veröffentlichungstag der Anmeldung: 02.08.2000
(73) Patentinhaber: BSH Bosch und Siemens Hausgeräte GmbH, 81669 München (DE)
(72) Erfinder: HIRATH, Jürgen, D-89522 Heidenheim (DE); SCHÜTTE, Markus, D-90409 Nürnberg (DE)
(86) Internationale Anmeldenummer: EP9806604
(87) Internationale Veröffentlichungsnummer: WO99020965

(56) Entgegenhaltungen:
- DE-A- 19 520 020
- US-A- 1 898 977
- US-A- 2 518 673
- US-A- 3 156 975
- US-A- 3 161 265
- US-A- 5 634 256

## Beschreibung

Die Erfindung betrifft eine auf Vakuumisolationstechnik basierende wärmeisolierende Wandung.

Bei auf Vakuumisolationstechnik basierenden wärmeisolierenden Wandungen sind deren zueinander beabstandete, meist aus Edelstahlblech oder korrosionsgeschütztem Stahlblech geformte äußere Wandungsschalen miteinander durch ein an beiden Wandungsschalen schweißtechnisch vakuumdicht festgesetztes Verbindungsprofil miteinander verbunden. Das Verbindungsprofil ist dabei in den überwiegenden Fällen in einzelne Längsabschnitte unterteilt, um eine kostengünstige Herstellung zu erreichen und andererseits um den Fertigungs- und Formtoleranzen an seiner Fügestelle zwischen den beiden äußeren Hüllwänden entgegenwirken zu können. Diese Art des Aufbaus und der Montage eines Verbindungsprofils zieht jedoch nach sich, dass die Einzelabschnitte untereinander vakuumdicht miteinander verbunden sein müssen. Hierbei hat man die Verbindungsstelle bei den bekannten Verbindungsprofilen sowohl als Stumpfstoß als auch als Überlappstoß ausgebildet, wobei die Stoßstellen schweißtechnisch miteinander verbunden sind. Um die für eine sachgerechte Verschweißung der Verbindungsprofile notwendigen Spannkräfte auf diese einleiten zu können und gleichzeitig beim Verschweißvorgang durch die Wärmezufuhr bedingte, gegebenenfalls zu Leckagen führende Verwerfungen zwischen den Verbindungspartnem zu vermeiden, hat man die Materialstärke der Verbindungsprofile in der Größenordnung der Materialstärke der Hültwände gewählt.

Aus der US-A-1 898 977 ist eine auf Vakuumisolationstechnik beruhende wärmeisolierende Wandung mit zwei im Abstand zueinander angeordneten Deckschichten bekannt. Die Deckschichten sind miteinander durch ein Verbindungsprofil verbunden, das im wesentlichen aus einem umlaufend angeordneten Grundträger, gebildet aus schlecht wärmeleitendem Material, und einer dünnwandigen Metallplatte gebildet ist, die schweißtechnisch auf den dafür präparierten Grundträger festgesetzt ist. Zusätzlich ist zur Abstützung der dünnwandigen Metallplatte ein sich am Grundkörper abstützendes Füllstück vorgesehen.

Der Erfindung liegt die Aufgabe zugrunde, die Nachteile bei den aus dem Stand der Technik bekannten wärmeisolierenden Wandungen mit einfachen konstruktiven Maßnahmen zu vermeiden.

Diese Aufgabe wird gemäß den Merkmalen des Patentanspruches 1 gelöst.

Durch die Einbringung von Stützelementen zwischen die Deckschichten ist für die einzelnen Längsabschnitte des Verbindungsprofils an deren Stoßstelle nicht nur eine Montagehilfe in Form eines Auflagers geschaffen, sondern auch eine Abstützmaßnahme bereitgestellt, welche die vakuumdicht miteinander zu verbindenden Enden der Profilabschnitte gegen die beim Schweißvorgang zur Vermeidung von Verwerfungen notwendigen Spannkräfte in Richtung des mit Wärmeisolationsmaterial verfüllten Zwischenraumes aufzunehmen vermag. Femer ist durch das Auflager sichergestellt, dass die vakuumdicht bezüglich der Deckschichten festzusetzenden Profilabschnitte zumindest weitestgehend höhengleich angeordnet sind, wodurch nicht nur die vakuumdichte Befestigung entlang der Schenkel der Profilabschnitte, beispielsweise durch Verschweißen deutlich erleichtert ist, sondern auch die vakuumdichte Verbindung der Enden der Profilabschnitte mit dem Auflager, z.B. ebenfalls durch Verschweißen, sich deutlich einfacher darstellt. Darüber hinaus lässt sich durch das Einbringen der Auflager die Basis der Profilabschnitte besonders dünnwandig in Art einer Folie gestalten, da die Basis nicht mehr zum Auffangen von Spannkräften beim Einfügen und anschließendem vakuumdichten Verschweißen der Profilabschnitte mit den Deckschichten dienen muss. Durch die folienartige Gestaltung der Basis der Profilabschnitte ist deren Wärmeleitung deutlich herabgesetzt, so dass als Wärmeisolationsmaterialien zum Verfüllen des Zwischenraumes ohne nennenswerte Einbußen der Wärmeisolationseigenschaften hervorzurufen, auch preiswerte Wärmeisolationsmaterialien, wie z.B. offenzelliger Polyurethanschaum oder offenzelliger Polystyrolschaum zum Einsatz kommen können. Die als Stützelement ausgebildeten Auflager ermöglichen zudem ein rasches, positionsgenaues Einbringen der Profilabschnitte zwischen den äußeren Deckschichten, wodurch zusätzliche, zum vakuumdichten Verbinden der Profilabschnitte mit den Deckschichten an sich notwendige Justiermaßnahmen entfallen können, so dass sich eine kostengünstige Fertigung für die wärmeisolierende Wandung ergibt.

Besonders günstig hinsichtlich einer deutlich verminderten Wärmeleitung ist ein im Querschnitt U-förmig ausgebildetes Verbindungsprofil, wenn nach einer bevorzugten Ausführungsform des Gegenstandes der Erfindung vorgesehen ist, dass das Verbindungsprofil eine mit einer folienartigen, dünnwandigen Wandstärke ausgestattete Basis aufweist, welche am Stützelement aufliegt.

Gemäß einer weiteren bevorzugten Ausführungsform des Gegenstandes der Erfindung ist vorgesehen, dass das Stützelement als D-Profil ausgebildet ist, dessen Basis zur Abstützung der mit ihrer Basis auf den Stützelementen an der Fügestelle aufliegenden Profilabschnitte dient.

Hierdurch ist ein Stützelement bereitgestellt, welches durch seine Gestalt bereits eine gewisse Formsteifigkeit aufweist, wobei die Schenkel des U-profiligen Stützelements bereits eine gewisse Fügehilfe bei seinem Einbringen zwischen die Deckschichten darstellt. Ebenso bietet ein derartig ausgebildetes Stützelement eine flächige, den Montagevorgang der Profilabschnitte deutlich erleichtemde Auflagefläche.

Entsprechend einer vorteilhaften Ausgestaltung des Gegenstandes der Erfindung ist vorgesehen, dass das als U-Profil ausgebildete Stützelement mit seinen Stirnflächen an den Deckschichten festgesetzt ist.

Durch eine derartige Einbringung des Stützelements zwischen den Deckschichten sind deren Trageeigenschaften zur Abstützung der bei der Montage der einzelnen Profilabschnitte auftretenden Spannkräfte deutlich erhöht, da durch die Anordnung der Schenkel das Widerstandsmoment der Stützelemente gegen Durchbiegung wesentlich erhöht ist. Femer ist die durch das Stützelement zwischen den Deckschichten hervorgerufene Wärmeleitung minimiert.

Gemäß einer nächsten bevorzugten Ausführungsform des Gegenstandes der Erfindung ist vorgesehen, dass das als U-Profil ausgebildete Stützelement neben seinen Schenkeln an seinen Stirnseiten mit schenkelseitig gegenüber der Basis vorspringenden Laschen versehen ist, welche an den Deckschichten festgesetzt sind.

Durch die Anbringung der Laschen an den Stirnseiten der Stützelemente lassen sich diese besonders einfach und rasch an den Deckschichten, beispielsweise durch Schweißen befestigen, da der Schweißvorgang nicht an den ziemlich eng begrenzten Stirnflächen des U-Profils stattfinden muss, sondern an den deutlich großflächigeren Laschen stattfinden kann, welche zudem noch ein prozesssicheres, vakuumdichtes Verschweißen der Stützelemente mit den Deckschichten erlauben.

Nach einer weiteren bevorzugten Ausführungsform des Gegenstandes der Erfindung ist vorgesehen, dass das Stützelement als Napf mit wenigstens zwei zumindest annähernd parallel einander gegenüberliegenden Napfwänden ausgebildet ist, mit welchen es an den Deckschichten festgesetzt ist.

Derartige Stützelemente lassen sich besonders kostengünstig in großen Stückzahlen, beispielsweise durch Tiefziehen von dünnwandigem Edelstahlblech mit unterschiedlichen Geometrien und Abstützeigenschaften herstellen.

Gemäß einer nächsten bevorzugten Ausführungsform des Gegenstandes der Erfindung ist vorgesehen, dass die Profilabschnitte an der Fügestelle im Bereich des Stützelementes von einem Abdeckelement abgedeckt sind, welches vakuumdicht mit dem Stützelement verbunden ist.

Besonders sicher vakuumdicht abgedeckt sind die Enden der Profilabschnitte an ihren Fügestellen im Bereich des Stützelementes, wenn nach einer alternativen Ausführungsform des Gegenstandes der Erfindung vorgesehen ist, dass die Profilabschnitte an ihren die Fügestelle bildenden Enden im Bereich des Stützelementes von je einem das Ende eines Profilabschnittes überdeckenden Abdeckelement abgedeckt sind, welches vakuumdicht mit dem Stützelement verbunden ist.

Durch die Überdeckung der Stoßstelle zweier Profilabschnitte mittels eines Abdeckelementes lassen sich die auf dem Stützelement abgelegten freien Enden der Profilabschnitte besonders prozesssicher und mit hoher Prozessgeschwindigkeit an den Stützelementen vakuumdicht schweißtechnisch festsetzen, insbesondere dann, wenn das Abdeckteil zumindest annähernd die Materialstärke der Deckschichten bzw. des Auflagenteils aufweist.

Besonders einfach und kostengünstig herstellbar ist ein Abdeckteil, wenn nach einer nächsten vorteilhaften Ausgestaltung des Gegenstandes der Erfindung vorgesehen ist, dass das Abdeckelement oder die Abdeckelemente als Flachprofil ausgebildet ist oder sind, welches oder welche die Fügestelle im Bereich der Basis der im Querschnitt U-förmig ausgebildeten Profilabschnitte zumindest weitestgehend überdeckt oder überdecken und an den freien Enden der Profilabschnitte vakuumdicht schweißtechnisch festgesetzt ist oder sind.

Darüber hinaus lässt sich ein als Flachprofil ausgebildetes Abdeckteil besonders einfach und rasch im Fertigungsablauf an der vakuumdicht auszubildenden Stoßstelle zwischen den einzelnen Profilabschnitten positionieren.

Gemäß einer alternativen Ausführungsform des Gegenstandes der Erfindung ist vorgesehen, dass das Abdeckelement oder die Abdeckelemente als U-Profil ausgebildet ist oder sind, dessen oder deren Basis zusammen mit ihren Schenkeln die Fügestelle zwischen den Profilabschnitten zumindest weitestgehend überdeckt und vakuumdicht mit den Profilabschnitten verbunden ist oder sind.

Hierdurch lässt sich auf besonders einfache und sichere Weise eine vakuumdichte Verschweißung der einander zugewandten Enden der Profilabschnitte auch in deren Schenkelbereich mit den Deckschichten erreichen, da die Schweißnahtführung über die Schenkel des Abdeckteiles in die Schenkel der Profilabschnitte durchgehend verlaufen kann.

Entsprechend einer weiteren bevorzugten Ausführungsform des Gegenstandes der Erfindung ist vorgesehen, dass die Profilabschnitte zumindest an ihren Schenkeln in Art einer Nut- und Federverbindung zusammenfügbar sind.

Eine derartige Ausgestaltung der Schenkel der Profilabschnitte ermöglicht eine durchgehende prozesssichere Schweißnahtführung entlang der Schenkel der Profilabschnitte auch über deren Stoßstelle im Bereich der Stützelemente hinweg, da die Nut- und Federverbindung die auftretenden Längentoleranzen bei der Montage spaltfrei abzufangen vermögen. Femer erlaubt die Nut- und Federkonstruktion an den Schenkeln der Profilabschnitte in Kombination mit den U-förmig ausgebildeten, zumindest annähernd die Materialstärke der Deckschichten aufweisenden Abdeckelementen eine besonders robuste, vakuumdichte Verschweißung der Stoßstelle, welche zudem noch mit hoher Schweißgeschwindigkeit durchführbar ist. Außerdem ist durch die Möglichkeit des Zusammenfügens der einzelnen Profilabschnitte anhand der Nut- und Federverbindung die Vormontage der einzelnen Profilabschnitte zwischen den Deckschichten deutlich erleichtert, da diese bereits vor dem Verschweißvorgang als quasi durchgehender Profilzug in ihre montagerichtige Position bringbar sind. Femer wird durch die Möglichkeit der Zusammenfügung der Profilabschnitte nicht nur der Aufwand an Spannwerkzeugen deutlich herabgesetzt, sondem auch die zur einwandfreien Befestigung an den Deckschichten notwendige Spannhäufigkeit deutlich reduziert.

Besonders dauerhaft vakuumdicht bei geringem Eigengewicht und geringer Wärmeleitung lässt sich ein wärmeisolierendes Gehäuse und eine wärmeisolierende Tür für ein Kältegerät herstellen, wenn nach einer bevorzugten Ausführungsform des Gegenstandes der Erfindung vorgesehen ist, dass das Gehäuse und die Tür nach einem der Ansprüche 1 bis 9 ausgebildet sind.

Ebenfalls besonders dauerhaft vakuumdicht und mit besonders geringem Eigengewicht lässt sich eine den Backraum umschließende wärmeisolierende Herdmuffel eines Haushaltsherdes herstellen, wenn nach einer letzten bevorzugten Ausführungsform des Gegenstandes der Erfindung vorgesehen ist, dass die Herdmuffel nach einem der Ansprüche 1 bis 9 ausgebildet ist.

Die Erfindung ist in der nachfolgenden Beschreibung anhand von vier in der beigefügten Zeichnung vereinfacht dargestellten Ausführungsbeispielen erläutert.

Es zeigen:
- Fig. 1: in vereinfachter, schematischer Darstellung ein wärmeisolierendes Gehäuse eines Haushaltskühlschranks, mit zwei zueinander beabstandet angeordneten, an den freien Rändern mit einem Verbindungsprofil vakuumdicht verschweißten Deckschichten in Schnittdarstellung von der Seite,
- Fig. 2: eine der Deckschichten mit dem daran angeordneten Verbindungsprofil, zusammengefügt aus mehreren Profilabschnitten, welche an ihren Stoßstellen gemäß einer ersten Verbindungsvariante sowohl untereinander als auch mit den Deckschichten vakuumdicht verschweißt sind, in raumbildlicher Schnittansicht von vorne,
- Fig. 3: die Deckschicht und das Verbindungsprofil mit seinen Profilabschnitten gemäß Fig. 2, schweißtechnisch verbunden, in Seitenansicht,
- Fig. 4: eine zu Fig. 2 ähnliche Ausbildung für die schweißtechnische Verbindung der Stoßstellen der Profilabschnitte, welche im Unterschied zu Fig. 2 von einem als U-Profil ausgebildeten Stützelement abgestützt sind, dessen Schenkel parallel zur Stoßstelle verfäuft, in raumbildlicher Schnittansicht von vorne,
- Fig. 5: die Deckschicht und das Verbindungsprofil mit seinen Profilabschnitten gemäß Fig. 4, schweißtechnisch verbunden, in Seitenansicht,
- Fig. 6: eine zu Fig. 2 und Fig. 4 alternative Ausführungsform zur Ausbildung der schweißtechnisch vakuumdichten Verbindung der Profilabschnitte an der Stoßstelle miteinander und mit den Deckschichten, in raumbildlicher Schnittansicht von vome,
- Fig. 7: die Deckschichten und das Verbindungsprofil mit seinen Profilabschnitten gemäß Fig. 6, schweißtechnisch verbunden, in Seitenansicht,
- Fig. 8: eine zu Fig. 6 ähnliche schweißtechnische Verbindung der Profilabschnitte an ihrer Stoßstelle, welche im Unterschied zu Fig. 6 von einem U-förmig ausgebildeten Abdeckelement abgedeckt ist, in raumbildlicher Schnittansicht von vome und
- Fig. 9: die Deckschicht und das Verbindungsprofil mit seinen Profilabschnitten gemäß Fig. 8, schweißtechnisch verbunden, in Seitenansicht.

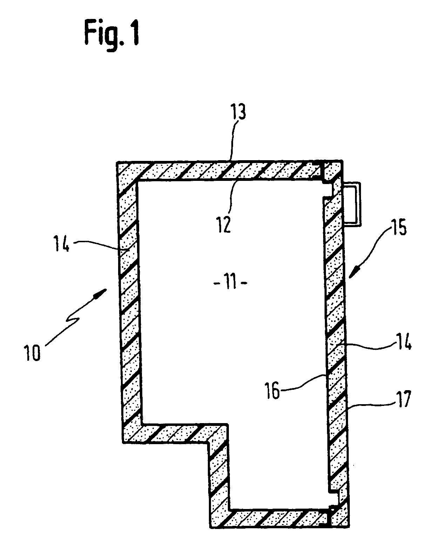

In Fig. 1 ist ein zur Verwendung für einen Haushaltskühlschrank geeignetes wärmeisolierendes Gehäuse 10 gezeigt, dessen als Kühlfach ausgebildeter Nutzraum 11 von einer als Innenverkleidung dienenden Deckschicht 12 ausgekleidet, welche beispielsweise aus einer Edelstahlblechplatine oder einer korrosionsgeschützten Stahlblechplatine mit einer Materialstärke von 0,4 mm oder aber aus einer metallbeschichteten bzw. laminierten Kunststoffplatine geformt ist. Im Abstand zur Deckschicht 12 weist das Gehäuse 10 eine weitere Deckschicht 13 auf, welche als Außenverkleidung dient und welche aus dem gleichen Material wie die Deckschicht 12 geformt ist. Zwischen den Deckschichten 12 und 13 ist ein zu deren Abstützung dienendes Stützmaterial in Form von offenzelligem Wärmeisolationsmaterial, wie beispielsweise plattenförmiger Polyurethanschaum oder plattenförmiger Polystyrolschaum eingebracht. Ein derartiges Wärmeisolationsmaterial 14 kommt auch bei einer am Öffnungsrand des Gehäuses 10 angeschlagenen Tür 15 zum Einsatz und dient zur Abstützung einer innenliegenden Deckschicht 16 gegen eine außenliegende Deckschicht 17. Beide Deckschichten 16 und 17 sind aus dem gleichen Material wie die Deckschichten 12 und 13 gefertigt. Sowohl die Deckschichten 16 und 17 als auch die Deckschichten 12 und 13 sind an ihren freien Rändern durch ein weiter unten genauer erläutertes Verbindungsprofil vakuumdicht miteinander verbunden.

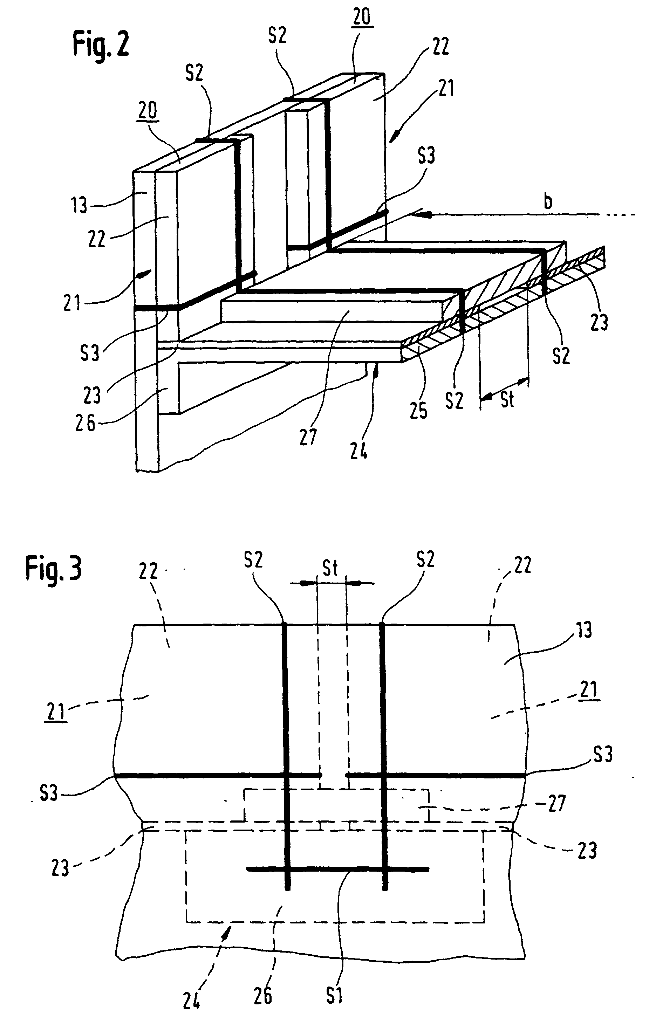

Eine in Fig. 2 gezeigte, am Beispiel des Gehäuse 10 erläuterte erste Ausführungsform eines Verbindungsprofils 20 ist seiner Länge nach in mehrere Profilabschnitte 21 unterteilt, von denen in Fig. 2 zwei mit ihren Endabschnitten im Abstand zueinander angeordnete Profilabschnitte 21 gezeigt sind. Die Profilabschnitte 21 sind im Querschnitt in Form eines U-Profils ausgebildet, dessen z. B. aus Edelstahlblech oder korrosionsgeschützten Stahlblech erzeugte Schenkel 22 in etwa die Materialstärke der Deckschichten 12 und 13 aufweisen und dessen Schenkel 22 miteinander verbindende Basis 23 aus folienartigem Edelstahl oder Stahlblech gebildet ist, deren Materialstärke beispielsweise 0,1 mm beträgt und somit wesentlich geringer als die Materialstärke der Schenkel 22 ist. Die Profilabschnitte 21 liegen mit ihrer Basis 23 auf einem im Querschnitt U-förmig ausgebildeten Stützelement 24 auf, dessen Basis 25 mit seiner Außenseite als Tragfläche für die Profilabschnitte 21 dient und dessen Schenkel 26 (nur einer davon ist gezeigt) an den Innenseiten der Deckschichten 12 und 13 anhand einer Schweißnaht S1 festgesetzt sind (siehe hierzu Fig. 3). Auf der der Basis 25 gegenüberliegenden Seite sind die eine Stoßstelle St bildenden Endabschnitte im Bereich der Basis 23 durch ein aus Edelstahlblech gefertigtes, flachprofiliges Abdeckelement 27 abgedeckt, welches die freien Enden der Basis 23 überdeckt und welches eine zumindest annähernd die lichte Weite zwischen den Schenkeln 22 ausmachende Breite b besitzt. Zur Befestigung des Abdeckelementes 27 sind zwei annähernd im parallelen Abstand zueinander angeordnete, beispielsweise mit einem Strahlschweißverfahren hergestellte, Schweißnähte S2 vorgesehen, welche den geschichteten Aufbau, gebildet aus dem Abdeckelement 27, den Endabschnitten der Basis 23 und der Basis 25, durchdringt und welche sich über die Höhe der Schenkel 22 bis hin zu deren freiem Ende erstreckt und die Schenkel 22 mit den Deckschichten 12 und 13 durch Durchschweißen miteinander verbindet. Femer sind die Schenkel 22 mit den Deckschichten 12 und 13 mit einer horizontal in Längsrichtung der Schenkel 22 verlaufenden Schweißnaht S3 vakuumdicht verbunden, welche sich mit dem über die Höhe der Schenkel 22 erstreckenden vertikalen Abschnitt der Schweißnaht S2 kreuzt, welche sich ihrerseits wieder mit der Schweißnaht S1 an den Schenkeln 26 des Stützelementes 24 kreuzt. Durch die Anordnung der Schweißnähte S1 bis S3 ist an der Stoßstelle zwischen den beiden Profilabschnitten schweißtechnisch ein vakuumdichter Verbund zwischen den Profilabschnitten 21 untereinander und zwischen diesen und den Deckschichten 12 und 13 erreicht, wobei die Schweißnaht S3 den vakuumdichten Verbund zwischen den Deckschichten 12 und 13 mit den Schenkeln 22, entlang dieser, sicherstellt.

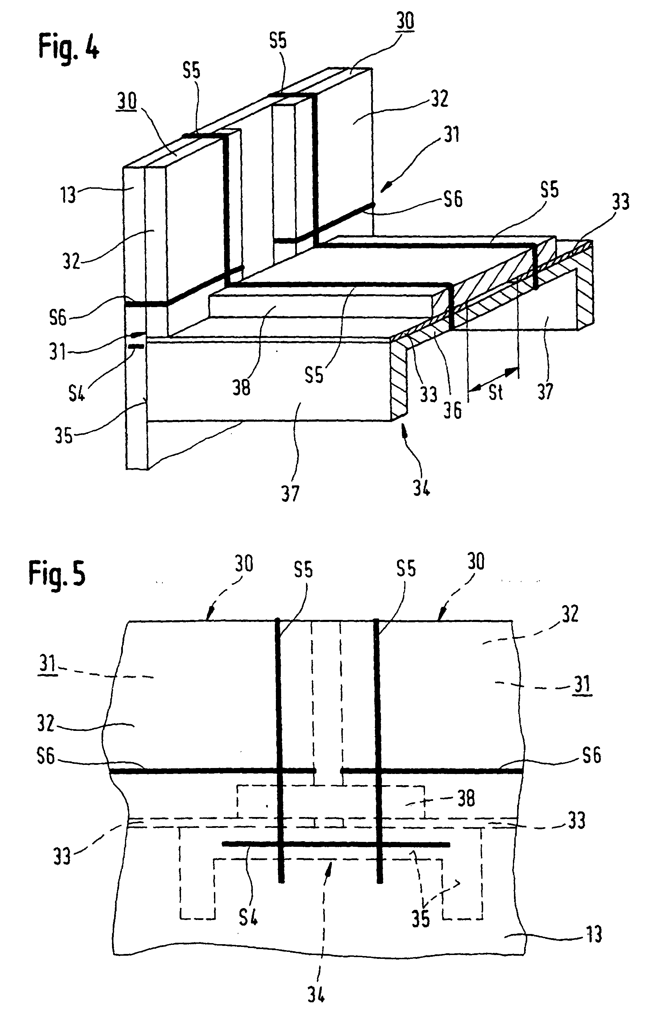

Gemäß Fig. 4 und 5 ist ein am Beispiel des Gehäuses 10 beschriebenes, zwischen den Deckschichten 12 und 13 angeordnetes Verbindungsprofil 30 gezeigt, welches analog zu dem Verbindungsprofil 20 ausgebildet ist und somit wie dieses aus mehreren, im Querschnitt U-profilartig ausgebildeten Längsprofilabschnitten 31 zusammengesetzt ist, dessen Schenkel 32 im wesentlichen die Materialstärke der Deckschichten 12 und 13 aufweisen und dessen die Schenkel verbindende Basis 33 mit seiner Außenseite sich auf einem im Querschnitt U-förmig ausgebildeten Stützelement 34 abstützt, welches mit seinen Stirnflächen 35 durch je eine horizontal im Stimflächenbereich seiner Basis 36 angeordnete Schweißnaht S4 befestigt ist und welches mit seiner seine beiden Schenkel 37 verbindenden Basis als Auflager für die freien Enden der Profilabschnitte 31 dient. Die freien Enden der im Abstand zueinander angeordneten, eine Stoßstelle St bildenden Profilabschnitte 31 sind im Bereich ihrer Basis 33 durch ein die freien Enden überdeckendes, aus Edelstahlblech oder korrosionsgeschütztem Stahlblech gefertigtes, flachprofiliges Abdeckelement 38 abgedeckt, welches zumindest annähernd die Materialstärke der Deckschichten 12 und 13 oder des Stützelementes 34 aufweist. Der durch das Abdeckelement 38 an der Stoßstelle St zwischen den Profilabschnitten 31 geschaffene geschichtete Aufbau ist durch zwei im Abstand zueinander angeordnete, zumindest annähernd parallel zu den längeren Seitenrändern des Abdeckelementes 38 verlaufende, beispielsweise durch ein Strahlschweißverfahren erzeugte Schweißnähte S5 zusammengehalten, welche sich in einem Zug durchlaufend über die Höhe der Schenkel 32 erstrecken und die Schenkel 32 mit den Deckschichten 12 und 13 vakuumdicht binden sowie sich mit den Schweißnähten S4 kreuzen. Die Schweißnähte S5 sind von entlang den Schenkeln 32 verlaufenden, nahe der Basis 33 angeordneten Schweißnähten S6 gekreuzt, welche die Schenkel 32 ihrer Länge nach mit den Deckschichten 12 und 13 vakuumdicht verbinden. Der vakuumdichte Verbund der Profilabschnitte 31 an ihrer Stoßstelle St ist durch die Anordnung der Schweißnähte S4 bis S6 samt ihren Kreuzungspunkten untereinander bewirkt. Gleichzeitig ist auch die Wärmeleitung über die Profilabschnitte wesentlich verringert.

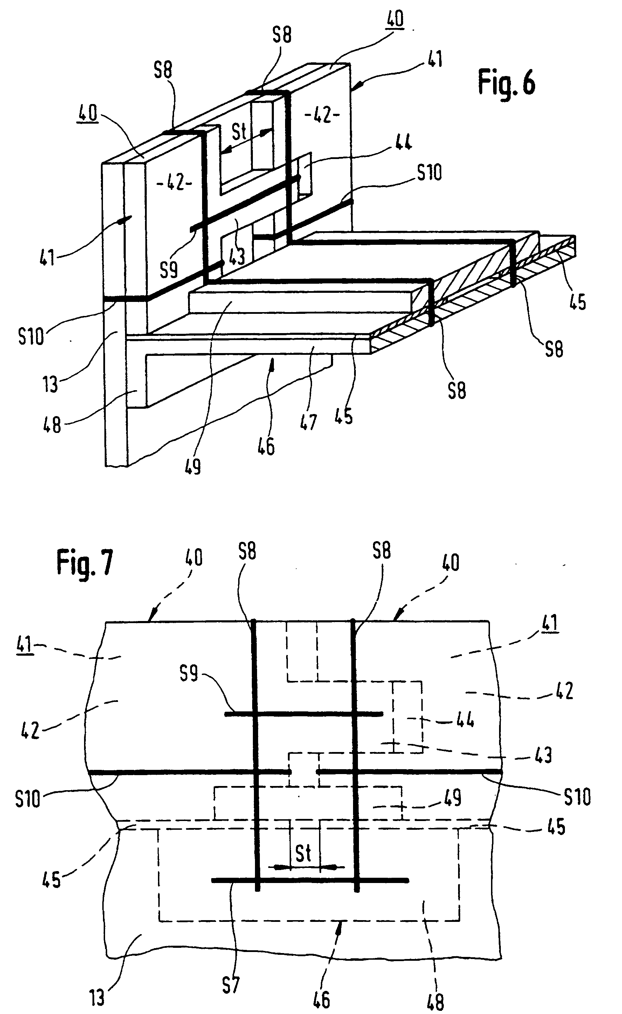

In den Figuren 6 und 7 ist eine alternative Ausführungsform eines am Beispiel des Gehäuses 10 beschriebenen, zwischen den Deckschichten 12 und 13 festgesetzten Verbindungsprofils 40 dargestellt, welches wie die Verbindungsprofile 20 und 30 seiner Länge nach in Profilabschnitte 41 unterteilt ist, welche im Querschnitt in Form eines U-Profils ausgebildet sind und dessen zumindest annähernd die Wandstärke der Deckschichten 12 und 13 aufweisende Schenkel 42 an ihren einander zugewandten Enden zur Versteifung der freien Enden anhand einer Nut- und Federverbindung verbindbar sind, wobei einer der Schenkel 42 einen als Feder dienenden, zapfenartigen Fortsatz 43 trägt, während der andere Schenkel 42 mit einer als Nut dienenden Aufnahme 44 versehen ist, in welche der Fortsatz 43 zur zusätzlichen Versteifung der Profilabschnitte an ihrer Stoßstelle St einfügbar ist. Die Schenkel 42 der Profilabschnitte 41 sind miteinander durch eine mit einer folienartigen Materialstärke ausgestatteten Basis 45 verbunden, welche mit ihrer von den freien Schenkelenden abgewandten Unterseite an einem im Querschnitt als U-Profil ausgebildeten Stützelement 46 aufliegt, dessen Basis 47 hierbei als Auflager dient und dessen in Längserstreckungsrichtung der Schenkel 42 verlaufende Schenkel 48 (nur ein Schenkel 48 ist dargestellt) zur Festsetzung des Stützelementes an den Deckschichten 12 und 13 vorgesehen sind, wobei die Befestigung der Schenkel 48 durch eine Schweißnaht S7 bewirkt ist. Gegenüber der Basis 47 sind die freien Enden der Profilabschnitte 41 und die zwischen diesen liegende Stoßstelle St durch ein im Querschnitt flachprofilig ausgebildetes, beispielsweise aus Edelstahl oder korrosionsgeschütztem Stahlblech gefertigtes Abdeckelement 49 abgedeckt. Das Abdeckelement 49 weist im wesentlichen die Materialstärke der Schenkel 42 auf und ist mit der Basis 47 des Stützelementes 46 durch zwei den sandwichähnlichen Aufbau, gebildet aus dem Abdeckelement 49, der Basis 45 und der Basis 47 durchsetzende Schweißnähte S8 vakuumdicht verbunden. Die Schweißnähte S8 verlaufen dabei annähernd parallel zum freien Ende der Basis 45 und setzen sich ohne Unterbrechung über die Schenkel 42 fort, wo sie im Bereich des Fortsatzes 43 von einer Schweißnaht S9 und im Bereich der Schenkel 48 von der Schweißnaht S7 gekreuzt werden und verbinden die Schenkel 42 mit den Deckschichten 12 und 13 (nur eine ist gezeigt) durch Durchschweißen vakuumdicht miteinander. Diese Deckschichten sind mit den Schenkeln 42 durch Schweißnähte S10 vakuumdicht verbunden, welche sich am freien Ende der Schenkel 42 sich mit den Schweißnähten S8 kreuzen und welche längs der Schenkel 42 im Nahbereich der Basis 45 der Profilabschnitte 41 angeordnet sind. Diese sind an ihren einander zugewandten, die Stoßstelle St bildenden Enden durch die Schweißnähte S8 bis S10 und deren Zusammenwirken vakuumdicht mit den Deckschichten 12 und 13 verbunden, wobei durch diesen Verbund die Wärmeleitung zwischen den Deckschichten 12 und 13 minimiert ist.

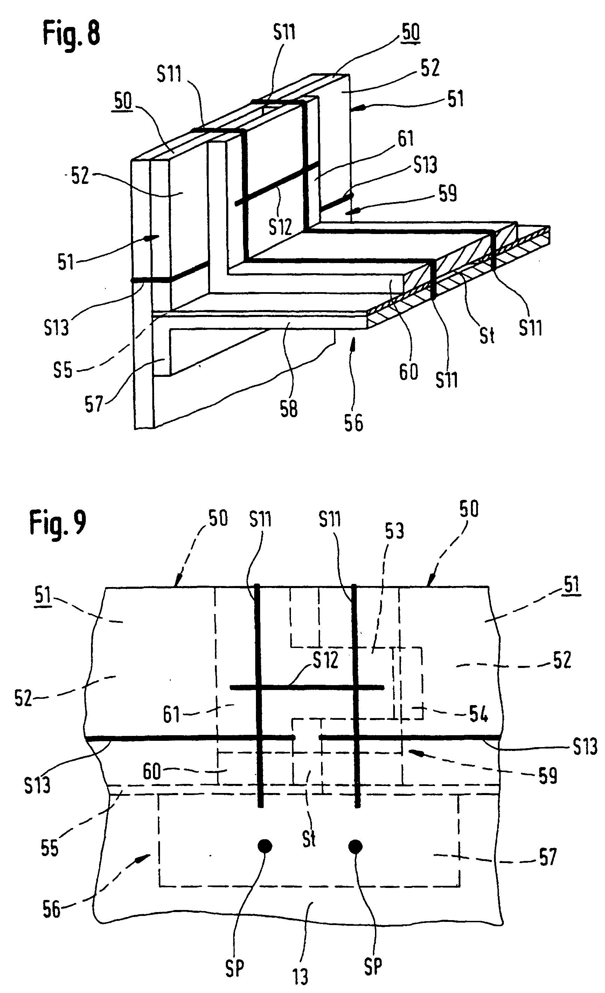

Die Figuren 8 und 9 zeigen ein zwischen den Deckschichten 12 und 13 angeordnetes, analog zu dem Verbindungsprofil 40 ausgebildetes Verbindungsprofil 50. Dieses ist wie die anderen Verbindungsprofile 20, 30 und 40 seiner Länge nach in einzelne Profilabschnitte 51 unterteilt, welche im Querschnitt als U-Profil ausgebildet sind, dessen einander gegenüberliegende Schenkel 52 (hier ist nur einer dargestellt) an ihren einander zugewandten Enden mit einer Nut- und Federverbindung verbindbar sind. Hierzu ist einer der Schenkel 52 mit einem als Feder dienenden zapfenartigen Fortsatz 53 versehen, während der andere Schenkel 52 eine als Nut dienende Aufnahme 54 aufweist, in welche der Fortsatz 53 einfügbar ist, wodurch die einander zugewandten Enden der Profilabschnitte 51 an ihrer Stoßstelle St gegeneinander abgestützt sind. Femer sind die Profilabschnitte 51 an ihrer Stoßstelle St mit einer die beiden Schenkel 52 miteinander verbindenden, hinsichtlich ihrer Materialstärke folienartig ausgebildeten Basis 55, welche zum Zwecke der Abstützung auf einem im Querschnitt U-profilartig ausgebildeten, die Materialstärke der Schenkel 52 aufweisenden Stützelement 56 aufliegt, dessen in Richtung der Schenkel 52 angeordnete Schenkel 57 (hiervon ist nur einer dargestellt) anhand von zwei im Abstand zueinander angeordneten Schweißpunkten SP an den Deckschichten 12 und 13 gehaltert sind und dessen die Schenkel 57 verbindende Basis 58 den eigentlichen Träger für die Profilabschnitte 51 bildet. Der Basis 58 gegenüberliegend ist zwischen den Schenkeln 52 ein die Stoßstelle St zwischen den Profilabschnitten 51 abdeckendes, als U-Profil ausgebildetes Abdeckelement 59 vorgesehen, dessen Basis 60 die freien Enden der Basis 55 überdeckt, während dessen Schenkel 61 die freien Enden der Schenkel 52 überbrücken. Zur Befestigung des Abdeckelementes 59 sind zwei im parallelen Abstand zueinander angeordnete, beispielsweise durch Strahlschweißen erzeugte Schweißnähte S11 vorgesehen, welche sich entlang der Basis 60 und der Schenkel 61 erstrecken. Die Schweißnähte S11 sind im Bereich des Fortsatzes 53 von einer Schweißnaht S12 gekreuzt, welche im wesentlichen die Länge des Fortsatzes 53 an den Schenkeln 52 aufweist. Diese sind mit den Deckschichten 12 und 13 durch eine nahe der Basis 55 vorgesehene Schweißnaht S13 vakuumdicht verbunden, welche entlang der Schenkel 52 der Profilabschnitte 51 verläuft und welche sich mit den Schweißnähten S11 kreuzt
(siehe hierzu Fig. 9). Durch die Anordnung der Schweißnähte S11 bis S13, deren Kreuzungspunkte untereinander und deren Einzelverlauf sind die Profilabschnitte 51 an ihren freien Enden sowohl vakuumdicht mit den Deckschichten 12 und 13 als auch untereinander bei gleichzeitiger minimaler Wärmeleitung zwischen den Deckschichten 12 und 13 verbunden.

Der konstruktive Aufbau der Verbindungsprofile und deren einzelne Profilabschnitte mit deren Unterstützung durch die Stützelemente an den Stoßstellen zwischen den Profilabschnitten ist auch zum Verbinden der Deckschichten 16 und 17 der Tür 15 zumindest in ähnlicher Weise anwendbar.

Die vorliegende Erfindung ist auch für den Aufbau einer den Backraum eines Haushaltsherdes umgrenzenden Herdmuffel einsetzbar, wobei die zwischen den Deckschichten zu deren Abstützung vorgesehenen Wärmeisolationsmaterialien entsprechend den dort auftretenden Temperaturen auszubilden sind.

Anstelle der zur Verdickung der Enden der Profilabschnitte an der Fügestelle zum Einsatz kommenden Abdeckelemente ist es auch möglich, eine Verdickung des jeweiligen Endes des Profilabschnittes durch ein jedem Ende eines Profilabschnittes gesondert zugeordneten Verstärkungsteiles zu erzielen.

## Patentansprüche

1. Wärmeisolierende Wandung mit zwei äußeren im Abstand zueinander angeordneten, zumindest im Wesentlichen vakuumdichten Deckschichten (12, 13), welche mit einem entlang ihrer Kontur verlaufenden, aus mehreren Längsprofilabschnitten (21, 31, 41, 51) zusammengefügten Verbindungsprofil (20, 30, 40, 50) vakuumdicht miteinander verbunden sind und welche zusammen mit dem Verbindungsprofil (20, 30, 40, 50) einen evakuierbaren Zwischenraum umschließen, welcher mit einem evakuierbaren Wärmeisolationsmaterial (14) verfüllt ist, wobei die Längsprofilabschnitte (21, 31, 41, 51) des Verbindungsprofils (20, 30, 40, 50) an ihren Fügestellen durch ein an den Deckschichten (12, 13; 16, 17) festgesetztes, als Auflager für die Längsprofilabschnitte (21, 31, 41, 51) dienendes Stützelement (24, 34, 46, 56) abgestützt sind, welches mit den Profilabschnitten (21, 31, 41, 51) vakuumdicht verbunden ist.

2. Wärmeisolierende Wandung nach Anspruch 1, mit einem im Querschnitt zumindest weitgehend U-förmig ausgebildeten Verbindungsprofil, **dadurch gekennzeichnet, dass** das Verbindungsprofil (20, 30, 40, 50) eine mit einer folienartigen, dünnwandigen Wandstärke ausgestattete Basis (23, 33, 45, 55) aufweist, welche am Stützelement (24, 34, 46, 56) aufliegt.

3. Wärmeisolierende Wandung nach Anspruch 1 oder 2, **dadurch gekennzeichnet, dass** das Stützelement (24, 34, 46, 56) als U-Profil ausgebildet ist, dessen Basis (25, 37, 47, 58) zur Abstützung der einander zugewandten Enden der Profilabschnitte (21, 31, 41, 51) dient.

4. Wärmeisolierende Wandung nach Anspruch 3, **dadurch gekennzeichnet, dass** das als U-Profil ausgebildete Stützelement (34) mit seinen Stimflächen (35) an den Deckschichten (12, 13) festgesetzt ist.

5. Wärmeisolierende Wandung nach einem der Ansprüche 3 oder 4, **dadurch gekennzeichnet, dass** das als U-Profil ausgebildete Stützelement neben seinen Schenkeln an seinen Stirnseiten mit schenkelseitig gegenüber der Basis vorspringenden Laschen versehen ist, welche an den Deckschichten (12, 13 bzw. 16, 17) festgesetzt sind.

6. Wärmeisolierende Wandung nach Anspruch 1 oder 2, **dadurch gekennzeichnet, dass** das Stützelementes als Napf mit wenigstens zwei zumindest annähernd parallel einander gegenüberliegenden Napfwänden ausgebildet ist, mit welchem es an den Deckschichten (12, 13) festgesetzt ist.

7. Wärmeisolierende Wandung nach einem der Ansprüche 1 oder 3, **dadurch gekennzeichnet, dass** die Profilabschnitte (21, 31, 41, 51) an der Fügestelle im Bereich des Stützelementes (24, 34, 46, 56) von einem Abdeckelement (27, 38, 49, 59) abgedeckt sind, welches vakuumdicht mit dem Stützelement verbunden ist.

8. Wärmeisolierende Wandung nach einem der Ansprüche 1 oder 3, **dadurch gekennzeichnet, dass** die Profilabschnitte (21, 31, 41, 51) an ihren die Fügestelle bildenden Enden im Bereich des Stützelementes (24, 34, 46, 56) von je einem das Ende eines Profilabschnittes (21, 31, 41, 51) überdeckenden Abdeckelement abgedeckt sind, welches vakuumdicht mit dem Stützelement verbunden ist.

9. Wärmeisolierende Wandung nach Anspruch 7 oder 8, **dadurch gekennzeichnet, dass** das Abdeckelement (27, 38, 49) oder die Abdeckelemente als Flachprofil ausgebildet ist oder sind, welches oder welche die Fügestelle im Bereich der Basis (23, 33, 45) der im Querschnitt U-förmig ausgebildeten Profilabschnitte (21, 31, 41) zumindest weitestgehend überdeckt oder überdecken und an den freien Enden der Profilabschnitte (21, 31, 41) vakuumdicht mit den Stützelementen (24, 34, 46, 56) verbunden ist oder sind.

10. Wärmeisolierende Wandung nach Anspruch 7 oder 8, **dadurch gekennzeichnet, dass** das Abdeckelement (59) oder die Abdeckelemente als D-Profil ausgebildet ist oder sind, dessen oder deren Basis (60) zusammen mit ihren Schenkeln (61) die Fügestelle zwischen den Profilabschnitten (51) zumindest weitestgehend überdeckt und vakuumdicht mit den Profilabschnitten (51) und den Stützelementen (24, 34, 46, 56) verbunden ist oder sind.

11. Wärmeisolierende Wandung nach einem der Ansprüche 1 bis 8, **dadurch gekennzeichnet, dass** die Profilabschnitte (41 51) zumindest an ihren Schenkeln (42, 52) in Art einer Nut- und Federverbindung zusammenfügbar sind.

12. Kältegerät mit einem wärmeisolierenden Gehäuse und einer wärmeisolierenden Tür, **dadurch gekennzeichnet, dass** das Gehäuse (10) und die Tür (15) nach einem der Ansprüche 1 bis 9 ausgebildet sind.

13. Haushaltsherd mit einer als einen Backraum umgrenzenden, wärmeisolierenden Herdmuffel, **dadurch gekennzeichnet, dass** die Herdmuffel nach einem der Ansprüche 1 bis 9 ausgebildet ist.

## Claims

1. Thermally insulating wall with two outer at least substantially vacuum-tight cover layers (12, 13), which are arranged at a spacing from one another and which are vacuum-tightly connected together by a connecting profile member (20, 30, 40, 50), which extends along the contour of the cover layers and is composed of several longitudinal profile sections (21, 31, 41, 51), and together with the connecting profile member (20, 30, 40, 50) enclose an evacuatable intermediate space filled with an evacuatable thermally insulating material (14), wherein the longitudinal profile sections (21, 31, 41, 51) of the connecting profile member (20, 30, 40, 50) are supported at their joint locations by a support element (24, 34, 46, 56) which is fixed to the cover layers (12, 13; 16, 17) and serves as a rest for the longitudinal profile sections (21, 31, 41, 51) and which is vacuum-tightly connected with the profile sections (21, 31, 41, 51).

2. Thermally insulating wall according to claim 1, with a connecting profile member constructed to be at least substantially U-shaped in cross-section, **characterised in that** the connecting profile member (20, 30, 40, 50) has a film-like base (23, 33, 45, 55) which is provided with a thin-walled wall thickness and which rests on the support element (24, 34, 46, 56).

3. Thermally insulating wall according to claim 1 or 2, **characterised in that** the support element (24, 34, 46, 56) is formed as a U-shaped profile member, the base (25, 37, 47, 58) of which serves for support of the mutually facing ends of the profile sections (21, 31, 41, 51).

4. Thermally insulating wall according to claim 3, **characterised in that** the support element (34) constructed as a U-shaped profile member is fixed by its end surfaces (35) to the cover layers (12, 13).

5. Thermally insulating wall according to one of claims 3 and 4, **characterised in that** the support element constructed as a U-shaped profile member apart from its limbs is provided at its end faces with straps which project at the limb side relative to the base and are fixed to the cover layers (12, 13 or 16, 17).

6. Thermally insulating wall according to claim 1 or 2, **characterised in that** the support element is formed as a cup with at least two cup walls which are disposed at least approximately parallel and opposite to one another and by which the support element is fixed to the cover layers (12, 13).

7. Thermally insulating wall according to one of claims 1 and 3, **characterised in that** the profile sections (21, 31, 41, 51) are covered at the joint location in the region of the support element (24, 34, 46, 56) by a cover element (27, 38, 49, 59) which is vacuum-tightly connected with the support element.

8. Thermally insulating wall according to one of claims 1 and 3, **characterised in that** the profile sections (21, 31, 41, 51) are covered at their ends, which form the joint location, in the region of the support element (24, 34, 46, 56) by a respective cover element which covers the end of a profile section (21, 31, 41, 51) and is vacuum-tightly connected with the support element.

9. Thermally insulating wall according to claim 7 or 8, **characterised in that** the cover element (27, 38, 49) or the cover elements is or are constructed as a flat profile which at least substantially covers the joint location in the region of the base (23, 33, 45) of the profile sections (21, 31, 41), which are constructed to be U-shaped in cross-section, and is vacuum-tightly connected with the support elements (24, 34, 46, 56) at the free ends of the profile sections (21, 31, 41).

10. Thermally insulating wall according to claim 7 or 8, **characterised in that** the cover element (59) or the cover elements is or are constructed as a U-shaped profile, the base (50) of which together with the limbs (61) t hereof at least substantially covers the joint location between the profile sections (51) and is vacuum-tightly connected with the profile sections (51) and the support elements (24, 34, 46, 56).

11. Thermally insulating wall according to one of claims 1 to 8, **characterised in that** the profile sections (41, 51) can be joined together at least at the limbs (42, 52) thereof in the manner of a groove-and-key connection.

12. Refrigerating appliance with a thermally insulating housing and a thermally insulating door, **characterised in that** the housing (10) and the door (15) are constructed in accordance with one of claims 1 to 9.

13. Domestic oven with a thermally insulating oven muffle bounding a baking chamber, **characterised in that** the oven muffle is constructed according to one of claims 1 to 9.

## Revendications

1. Paroi calorifuge comprenant deux couches extérieures de recouvrement (12, 13) situées à distance l'une de l'autre et au moins sensiblement étanches au vide, lesquelles sont assemblées l'une avec l'autre de manière étanche au vide au moyen d'un profilé d'assemblage (20, 30, 40, 50) courant sur leur contour et composé par l'assemblage de plusieurs segments de profilé longitudinaux (21, 31, 41, 51) et lesquelles entourent, conjointement avec le profilé d'assemblage (20, 30, 40, 50), un espace intermédiaire pouvant être mis sous vide, lequel est rempli de matériau calorifuge (14) pouvant être mis sous vide, les segments de profilé longitudinaux (21, 31, 41, 51) du profilé d'assemblage (20, 30, 40, 50) étant supportés, à l'endroit où ils s'assemblent, par un élément de support (24, 34, 46, 56) fixé aux couches de recouvrement (12, 13, 16, 17) et servant de support pour les segments de profilé longitudinaux (21, 31, 41, 51), ledit élément de support étant assemblé de manière étanche au vide avec lesdits segments de profilé (21, 31, 41, 51).

2. Paroi calorifuge selon la revendication 1, comprenant un profilé d'assemblage dont la section est configurée au moins sensiblement en forme de U, **caractérisée en ce que** le profilé d'assemblage (20, 30, 40, 50) présente une base (23, 33, 45, 55) ayant une paroi de faible épaisseur et réalisée en forme de feuille, ladite base étant appliquée sur l'élément de support (24, 34, 46, 56).

3. Paroi calorifuge selon la revendication 1 ou 2, **caractérisée en ce que** l'élément de support (24, 34, 46, 56) est réalisé comme profilé en forme de U dont la base (25, 37, 47, 58) sert à supporter les extrémités des segments de profilé (21, 31, 41, 51) qui se font face.

4. Paroi calorifuge selon la revendication 3, **caractérisée en ce que** l'élément de support (34) réalisé comme profilé en forme de U est fixé par ses faces frontales (35) aux couches de recouvrement (12, 13).

5. Paroi calorifuge selon l'une des revendications 3 ou 4, **caractérisée en ce que** l'élément de support réalisé comme profilé en forma de U est pourvu, à côté de ses branches, sur ses faces frontales, de pattes faisant saillie du côté des branches par rapport à la base, lesdites pattes étant fixées aux couches de recouvrement (12, 13 resp. 16, 17).

6. Paroi calorifuge selon la revendication 1 ou 2, **caractérisée en ce que** l'élément de support est réalisé en forme de godet comprenant au moins deux parois opposées et au moins sensiblement parallèles, par lequel ledit élément de support est fixé aux couches de recouvrement (12, 13).

7. Paroi calorifuge selon l'une des revendications 1 ou 3, **caractérisée en ce que** les segments de profilé (21, 31, 41, 51) sont recouverts, à l'endroit où ils s'assemblent au niveau de l'élément de support (24, 34, 46, 56), d'un élément de recouvrement (27, 38, 49, 59), lequel est assemblé de manière étanche au vide avec l'élément de support.

8. Paroi calorifuge selon l'une des revendications 1 ou 3, **caractérisée en ce que** les segments de profilé (21, 31, 41, 51) sont recouverts, au niveau de leurs extrémités réalisant leur assemblage au niveau de l'élément de support (24, 34, 46, 56), d'un élément de recouvrement recouvrant chacun l'extrémité d'un segment de profilé (21, 31, 41, 51), ledit élément de recouvrement étant assemblé de manière étanche au vide avec l'élément de support.

9. Paroi calorifuge selon la revendication 7 ou 8, **caractérisée en ce que** l'élément de recouvrement (27, 38, 49) ou les éléments de recouvrement est ou sont réalisé(s) comme profilé(s) plat(s) recouvrant au moins en majeure partie l'endroit où s'assemblent, au niveau de la base (23, 33, 45), les segments de profilés (21, 31, 41) de section en forme de U, ledit élément de recouvrement ou lesdits éléments de recouvrement étant assemblé(s) de manière étanche au vide avec les éléments de support (24, 34, 46, 56) au niveau des extrémités libres des segments de profilé (21, 31, 41).

10. Paroi calorifuge selon la revendication 7 ou 8, **caractérisée en ce que** l'élément de recouvrement (59) ou les éléments de recouvrement est ou sont réalisé(s) comme profilé(s) en forme de U dont la base (60) coopère avec les branches (61) pour recouvrir, au moins en majeure partie, l'endroit d'assemblage entre les segments de profilés (51), ledit élément de recouvrement ou lesdits éléments de recouvrement étant assemblé(s) de manière étanche au vide avec les éléments de support (24, 34, 46, 56) et les segments de profilé (51).

11. Paroi calorifuge selon l'une des revendications 1 à 8, **caractérisée en ce que** les segments de profilé (41, 51) sont assemblables, au moins en leurs branches (42, 52), à la façon d'un assemblage à mortaise et tenon.

12. Appareil frigorifique comprenant une carcasse calorifuge et une porte calorifuge, **caractérisé en ce que** la carcasse (10) et la porte (15) sont réalisées conformément à l'une des revendications 1 à 9.

13. Cuisinière de ménage comprenant un moufle calorifuge qui délimite un espace de cuisson, **caractérisée en ce que** le moufle est réalisé conformément à l'une des revendications 1 à 9.
